# EUROPEAN PATENT APPLICATION

(11) **EP 4 349 187 A1**
(43) Date of publication of application: **10.04.2024**
(21) Application number: 22811403.9
(22) Date of filing: 27.05.2022
(51) Int. Cl.: A24D 3/04, A24D 3/14, A24F 15/01

(54) **FILTER WITH ADDED LIQUID, FLAVOR INHALATION ARTICLE EQUIPPED WITH SAID FILTER, AND FLAVOR INHALATION ARTICLE PACKAGE**

(30) Priority: 28.05.2021 JP 2021090526
(71) Applicant: Japan Tobacco, Inc., Tokyo, 105-6927 (JP)
(72) Inventor: INAGAKI, Michihiro, Tokyo 130-8603 (JP); KUBOTA, Hiroyuki, Tokyo 130-8603 (JP); LIN, Kuanhsuan, Tokyo 130-8603 (JP); Matsuba, Ryota, Tokyo 130-8603 (JP); SAKURAI, Toru, Tokyo 130-8603 (JP); TSUTSUMI, Takeo, Tokyo 130-8603 (JP); MANO, Tsukasa, Tokyo 130-8603 (JP); KULKARNI, Pranav, 54294 Trier (DE); DA SILVA ROSA, Diego, 54294 Trier (DE)
(74) Representative: Hoffmann Eitle
(86) International application number: PCT/JP2022/021700
(87) International publication number: WO 2022/250135

(57) **Abstract**

The present invention addresses the problem of providing: a filter in which a liquid having phenol filtration capability is prevented from leaking out even after prolonged storage; and a flavor inhalation article equipped with said filter. The problem is solved by a filter that is for a flavor inhalation article, and that has a filtering medium including a biodegradable material, and a paper roll wound around the filtering medium. The filtering medium contains a liquid having a phenol filtration capability. A surface of the roll paper where a contact is made with the filtering medium is made of a layer exhibiting liquid-repellent properties with respect to said liquid.

## Description

### Technical Field

The present invention relates to a filter with a liquid added thereto, a flavor inhalation article equipped with the filter, and a flavor inhalation article package.

### Background Art

Acetate fibers have been widely used as filter elements for smoking articles such as filtered cigarettes. In recent years, from the viewpoint of reducing the load on the environment, the use of degradable materials as filter elements of various products is being promoted, and it has been contemplated that biodegradable materials such as paper filters are used for the filter elements of smoking articles. However, the filtration efficiency of the paper filters against stimulus components such as phenols is lower than that of filters using acetate fibers, and the smoke through the paper filters tends to have a strong taste. Accordingly, there have been attempts to impart the function of filtering out stimulus components such as phenols to paper filters.

For example, Patent Document 1 discloses a filter to which triacetin is added to reduce phenols. In a filter to which a liquid is added, the liquid tends to leak out during storage. Therefore, in Patent Document 1, cellulose acetate is added to reduce the leakage. In Patent Document 2, a liquid having a viscosity adjusted to a predetermined value is used, or a plug wrap paper including an impermeable layer is used.

### Citation List

### Patent Document

Patent Document 1: International Publication No. WO 2019/149742
Patent Document 2: Japanese Unexamined Patent Application Publication No. 2020-36534

### Summary of Invention

### Technical Problem

With the method described in Patent Document 1, the leakage of the liquid cannot be prevented sufficiently, and it was found that the liquid may leak out from the filter to a wrapping paper and a tipping paper during storage. Even when a liquid impermeable layer is formed in the plug wrap paper according to Patent Document 2, the leakage of the liquid cannot be prevented sufficiently in some cases.

As described above, with the techniques described in the Patent Literature, the liquid having the ability to filter out phenols and added to the filter cannot be retained in the filter stably.

The present invention provides a filter in which the leakage of the liquid having the ability to filter out phenols is reduced even after storage and also provides a flavor inhalation article provided with the filter.

### Solution to Problem

The present inventors have conducted extensive studies and found that, even when the liquid impermeable layer is formed in the plug wrap paper, the liquid may diffuse along the surface of the plug wrap paper in the longitudinal direction of the filter during long-term storage and leak out. However, the inventors have found that, by imparting repellency to the liquid having the ability to filter out phenols to the surface of the plug wrap paper that is in contact with the filter element, the leakage of the liquid having the ability to filter out phenols can be reduced and have thus reached the invention.

Accordingly, the invention is as follows.
[1] A filter for a flavor inhalation article, the filter including:
   a filter element containing a biodegradable material; and a plug wrap paper wrapped around the filter element,
   wherein the filter element contains a liquid having the ability to filter out phenols, and
   wherein a surface of the plug wrap paper that is in contact with the filter element is formed of a layer repellent to the liquid.
[2] The filter according to [1], wherein a spreading area of the liquid on the layer repellent to the liquid is 35 mm² or less.
[3] The filter according to [1] or [2], wherein the plug wrap paper is composed of a substrate and the layer repellent to the liquid, the layer being formed on a surface of the substrate that is in contact with the filter element.
[4] The filter according to any of [1] to [3], wherein the liquid is at least one selected from the group consisting of polypropylene glycol, polypropylene glycol glyceryl ether, polybutylene glycol, diglycerin, sorbitan fatty acid esters, glycerin fatty acid esters, polyglycerin fatty acid esters, propylene glycol fatty acid esters, polyethylene glycol, and caprylyl glycol.
[5] The filter according to any of [1] to [4], wherein the liquid is polypropylene glycol having a molecular weight of from 2000 to 4000 inclusive, polypropylene glycol glyceryl ether having a molecular weight of from 3000 to 4000 inclusive, or diglycerin.
[6] The filter according to any of [1] to [5], wherein the layer repellent to the liquid contains at least one selected from the group consisting of starch, cellulose nanofibers, ethyl cellulose, nitrocellulose, gum arabic, aluminum, paraffin, polyethylene, polypropylene, polyvinyl alcohol, fluorocarbon resins, acrylic resins, and silicones.
[7] The filter according to any of [1] to [6], wherein the layer repellent to the liquid contains at least one selected from the group consisting of ethyl cellulose, acrylic resins, paraffin, polyethylene, polypropylene, fluorocarbon resins, and silicones.
[8] The filter according to any of [1] to [5], wherein the layer repellent to the liquid is composed of paper repellent to the liquid.
[9] A flavor inhalation article including: a tobacco rod wrapped with a wrapping paper; the filter according to any of [1] to [8]; and a tipping paper that connects the tobacco rod and the filter together.
[10] The flavor inhalation article according to [9], wherein at least one of the tipping paper or the plug wrap paper includes a colored portion.
[11] A flavor inhalation article package including the flavor inhalation article according to [9] or [10], the flavor inhalation article being packed inside the flavor inhalation article package, wherein the flavor inhalation article is wrapped directly with an inner wrapper, and wherein a layer repellent to the liquid having the ability to filter out phenols is disposed at least in a portion of the inner wrapper that is in contact with the filter of the flavor inhalation article.
[12] The flavor inhalation article package according to [11], wherein the layer repellent to the liquid and included in the inner wrapper contains at least one selected from the group consisting of starch, cellulose nanofibers, ethyl cellulose, nitrocellulose, gum arabic, aluminum, paraffin, polyethylene, polypropylene, polyvinyl alcohol, fluorocarbon resins, acrylic resins, and silicones.
[13] The flavor inhalation article package according to [11] or [12], wherein the layer repellent to the liquid and included in the inner wrapper contains at least one selected from the group consisting of ethyl cellulose, acrylic resins, paraffin, polyethylene, polypropylene, fluorocarbon resins, and silicones.

### Advantageous Effects of Invention

The present invention can provide a filter in which leakage of a liquid having the ability to filter out phenols is reduced even after storage and can also provide a flavor inhalation article including the filter.

### Brief Description of Drawings

[Fig. 1] A schematic illustration showing a first configuration example of a flavor inhalation article according to an embodiment of the invention.
[Fig. 2] A schematic illustration showing a second configuration example of the flavor inhalation article according to the embodiment of the invention.
[Fig. 3] A schematic illustration showing a third configuration example of the flavor inhalation article according to the embodiment of the invention.
[Fig. 4] A graph showing spreading areas of polypropylene glycol glyceryl ether (PPG-GE) on various test materials.
[Fig. 5] A graph showing spreading areas of diglycerin on various test materials.
[Fig. 6] A graph showing the ability of various additives to filter out phenols in cigarette samples.

### Description of Embodiments

The present invention will be described in detail by way of embodiments and examples. However, the invention is not limited to the following embodiments and examples, and various modifications are possible so long as they do not depart from the scope of the invention.

### <Filter>

An embodiment of the present invention is a filter for a flavor inhalation article. The filter includes: a filter element containing a biodegradable material; and a plug wrap paper wrapped around the filter element. The filter element contains a liquid having the ability to filter out phenols, and a surface of the plug wrap paper that is in contact with the filter element is formed of a layer repellent to the liquid (hereinafter may be referred to simply as a "liquid repellent layer").

The plug wrap paper including the liquid impermeable layer that is described in Patent Document 2 can reduce the leakage in a direction passing through the impermeable layer. However, the liquid diffuses along the surface of the plug wrap paper during long-term storage, and therefore leakage of the liquid from edges of the plug wrap paper cannot be prevented. However, in the filter according to the embodiment of the invention, the surface of the plug wrap paper that is in contact with the filter element is formed of the layer repellent to the liquid having the ability to filter out phenols. In this manner, the diffusion of the liquid along the surface of the plug wrap paper is prevented, and the leakage of the liquid can be reduced.

No particular limitation is imposed on the form of the filter, and the filter may be a plain filter including one filter segment, a multi-segment filter including a plurality of filter segments such as a dual filter or a triple filter, etc.

With the filter in the present embodiment, the leakage of the liquid can be sufficiently reduced even when the filter is composed of one filter segment.

No particular limitation is imposed on the shape of the filter, and any well-known shape may be used for the filter. The filter generally has a cylindrical shape and may have the following form.

The filter may include sections such as cavities or recesses that each have a hollow (void) circumferential cross section.

The shape of the cross section of the filter that is orthogonal to the longitudinal axis of the filter is substantially circular, and the diameter of the circle can be appropriately changed according to the size of the product. The diameter is generally 4.0 mm or more, preferably 4.5 mm or more, and more preferably 5.0 mm or more and is generally 9.0 mm or less, preferably 8.5 mm or less, and more preferably 8.0 mm or less. When the cross section is not circular, the diameter is assumed to be the same as the diameter of a circle having the same area as the area of the cross section, and the diameter of this circle is used.

The circumferential length of the cross section of the filter that is orthogonal to the longitudinal axis of the filter can be appropriately changed according to the size of the product used. The circumferential length is generally 14.0 mm or more, preferably 15.0 mm or more, and more preferably 16.0 mm or more and is generally 27.0 mm or less, preferably 26.0 mm or less, and more preferably 25.0 mm or less.

The length of the filter in the longitudinal direction can be appropriately changed according to the size of the product. The length may be 5 mm or more, 10 mm or more, 15 mm or more, 17.5 mm or more, or 20.0 mm or more and may be 40 mm or less, 35 mm or less, 32.5 mm or less, or 30.0 mm or less.

No particular limitation is imposed on the air-flow resistance per 120 mm of the filter in its axial direction. The air-flow resistance is generally 100 mmH₂O or more, preferably 150 mmH₂O or more, and more preferably 200 mmH₂O or more and is generally 800 mmH₂O or less, preferably 700 mmH₂O or less, and more preferably 600 mmH₂O or less.

The air-flow resistance of the filter is measured, for example, using a filter air-flow resistance measurement device manufactured by Cerulean according to an ISO standard method (ISO 6565). The air-flow resistance of the filter is the difference in pressure between one of the end faces (a first end face) and the other end face (a second end face) when air is caused to flow at a predetermined flow rate (17.5 mL/s) with no air transmission through the side surface of the filter. The unit of the air-flow resistance is generally mmH₂O. As for the relation between the air-flow resistance of the filter and the length of the filter, they are known to be proportional to each other in a length range for commonly used filters (length: 5 mm to 200 mm). When the length is doubled, the air-flow resistance of the filer is doubled.

### <Filter element>

The filter in the present embodiment includes the filter element containing the biodegradable material. The biodegradable material is degraded by microorganisms, and its environmental load is small. Examples of the biodegradable material include cellulose, polylactic acid, poly(3-hydroxybutyrate-co-3-hydroxyhexanoate), polylactic acid/polycaprolactone copolymers, polyglycolic acid, polylactic acid/polyether copolymers, butanediol/long-chain dicarboxylic acid copolymers, polybutylene adipate/terephthalate, polytetramethylene adipate-co-terephthalate, polyethylene terephthalate succinate, polybutylene succinate, polybutylene succinate adipate, and polyvinyl alcohol. The biodegradable material is particularly preferably cellulose. A filter using a filter element containing cellulose is referred to also as a paper filter.

The filter element containing cellulose is typically paper formed from wood pulp. No particular limitation is imposed on the type of wood pulp, and wood pulp such as coniferous pulp or broadleaf pulp can be used. No particular limitation is imposed on the type of paper used for the filter, and gathered paper, pleated paper, crimped paper, crepe paper, nonwoven fabric, shredded paper, etc. may be used. A paper production method may be a wet method or a dry method, and any of them may be appropriately selected and used.

One feature of the paper filter is that it is more easily biodegradable than synthetic fiber tows such as cellulose acetate tows.

No particular limitation is imposed on the form of the filter element included in the filter. Examples of the form of the filter element include a bundle of fibrous filter elements and a bundle of sheet-shaped filter elements. In a particular example of the form of the paper filter, paper having a corrugated structure including a plurality of valleys and ridges is gathered in a bundle. When the paper having the corrugated structure is used, the paper is disposed such that the direction of the valleys (or ridges) is parallel to the longitudinal direction of the filter rod.

When the paper having the corrugated structure is used as the paper for the filter element forming the paper filter, no particular limitation is imposed on the average distance (which may be referred to also as the "average pitch") between the valleys or ridges in the corrugated shape of the paper filter. The average distance is generally 0.5 mm or more and preferably 1.0 mm or more and is generally 5.0 mm or less and preferably 4.0 mm or less.

No particular limitation is imposed on the average depth of the valleys of the corrugated shape of the paper filter, and the average depth is generally 0.1 mm or more and preferably 0.2 mm or more and is generally 1.2 mm or less and preferably 1.0 mm or less.

The paper having the corrugated structure can be produced by subjecting a flat raw material sheet with no corrugated shape to creping for forming ridges and valleys.

No particular limitation is imposed on the thickness of the raw material sheet, and the thickness is generally 20 µm or more, preferably 25 µm or more, and more preferably 30 µm or more and is generally 140 µm or less, preferably 130 µm or less, and more preferably 120 µm or less.

No particular limitation is imposed on the basis weight of the raw material sheet. The basis weight is generally 20 gsm or more and preferably 25 gsm or more and is generally 120 gsm or less, preferably 80 gsm or less, and more preferably 45 gsm or less.

The basis weight can be controlled by adjusting the content of the pulp and the content of a filler or adjusting the processing conditions for the wet-type paper machine.

No particular limitation is imposed on the width of the raw material sheet. The width of the raw material sheet is generally 50 mm or more, preferably 100 mm or more, and more preferably 170 mm or more and is 300 mm or less, preferably 250 mm or less, and more preferably 230 mm or less. The width of the raw material sheet is its length in a direction perpendicular to the longitudinal direction in which the ridges and valleys in the paper having the corrugated structure are continuously arranged, i.e., the length in a direction perpendicular to a direction corresponding to the longitudinal direction the filter element obtained by processing the paper having the corrugated structure.

The filter element used in the present embodiment contains the liquid having the ability to filter out phenols. In the present description, the "liquid" is a material that is in a liquid form at atmospheric pressure and 25°C. When the filter element contains the liquid having the ability to filter out phenols, predetermined components such as phenols, pyridine, and pyrazines contained in tobacco smoke can be selectively removed during smoking.

When the filter in the present embodiment is a multi-segment filter, it is only necessary that at least one of the filter segments contain the liquid having the ability to filter out phenols.

The liquid having the ability to filter out phenols is preferably non-volatile at 25°C. Specifically, the vapor pressure of the liquid at 25°C is preferably 0.2 Pa or less.

No particular limitation is imposed on the surface tension of the liquid having the ability to filter out phenols. The larger the surface tension, the better because the liquid is unlikely to leak out from the filter.

Examples of the liquid having the ability to filter out phenols include polypropylene glycol, polypropylene glycol glyceryl ether, polyethylene glycol, diglycerin, polybutylene glycol, caprylyl glycol, sorbitan fatty acid esters, glycerin fatty acid esters, polyglycerin fatty acid esters, propylene glycol fatty acid esters, and copolymers thereof. Of these, polypropylene glycol, polypropylene glycol glyceryl ether, diglycerin, polybutylene glycol, sorbitan fatty acid esters, glycerin fatty acid esters, and polyglycerin fatty acid esters are preferred, and polypropylene glycol, polypropylene glycol glyceryl ether, and polybutylene glycol are particularly preferred. One of them may be used alone, or a mixture of two or more in any ratio may be used.

When the liquid having the ability to filter out phenols is polypropylene glycol or polypropylene glycol glyceryl ether, their molecular weight is preferably 1000 or more, more preferably 2000 or more, and particularly preferably 3000 or more. No particular limitation is imposed on the upper limit of the molecular weight, but the molecular weight is 10000 or less. The larger the molecular weights of polypropylene glycol and polypropylene glycol glyceryl ether, the better because the influence on ink transfer tends to be small.

The content of the liquid having the ability to filter out phenols in the filter element with respect to the total amount of the filter including the filter element and the plug wrap paper is preferably 1 mg or more, more preferably 5 mg or more, and particularly preferably 10 mg or more. The content of the liquid is preferably 250 mg or less, more preferably 50 mg or less, and particularly preferably 30 mg or less. When the amount of the liquid having the ability to filter out phenols is within the above range, specific components in tobacco smoke can be selectively removed during smoking in a reliable manner. Moreover, the air-flow resistance of the filter is not changed significantly, and the production suitability of the filter is not significantly impaired. The above range of the content may be a range when one of the exemplified materials is used alone or may be a range of the total amount of a plurality of materials used in combination.

Well-known additives such as a thickener, a flavoring agent, and a coloring agent may be added to the liquid having the ability to filter out phenols that is used in the present embodiment.

When a thickener is contained, the leakage of the liquid added to the filter can be effectively prevented, and the appearance can be preferably maintained.

No particular limitation is imposed on the type of thickener so long as the thickener used can dissolve in water and the liquid having the ability to filter out phenols. Examples of the thickener include xanthan gum, gellan gum, psyllium seed gum, pectin, carboxymethyl cellulose, hydroxypropyl cellulose, polyvinyl alcohol, agarose, pullulan, alginic acid, polyacrylic acid, urethane compounds, and alkali meatal and alkaline earth metal salts thereof.

Of these, carboxymethyl cellulose is preferred.

The content of the thickener in the filter element varies depending on its type and is, for example, 0.5 to 200 mg/filter. When, for example, carboxymethyl cellulose is used, the amount of carboxymethyl cellulose per filter is 10 to 150 mg/filter.

The filter element containing the liquid having the ability to filter out phenols can be obtained by adding a solution containing the liquid to the filter element.

The content of the liquid having the ability to filter out phenols that is contained in the solution added to the filter element is, for example, 10 to 100% by weight. Specifically, the liquid alone may be added to the filter element, or a solution containing the liquid and an additional additive may be added. Even when the liquid alone is added, impurities such as water may be contained.

The content of the thickener in the solution varies depending on its type and is, for example, 1 to 80% by weight. The solution may contain water. The content of water in the solution is, for example, 4 to 30% by weight.

The concentration of each of the above components may be appropriately adjusted such that the content of the liquid having the ability to filter out phenols in the filter element after storage is 1 to 250 mg/filter.

No particular limitation is imposed on the viscosity of the solution used in the invention, so long as the production suitability of the filter is not significantly impaired. It is only necessary that the viscosity of the solution be such that it can be added to the filter element and retained in the filter.

For example, the viscosity at 25°C may be 10 mPa s or more and is preferably 100 mPa·s or more, and the viscosity at 80°C may be 1000 mPa·s or less.

No particular limitation is imposed on the method for adding the solution to the filter element, and a well-known method can be used. Specifically, the solution may be fed using a pressure pump or may be sprayed. When the filter element included in the filter is composed of a plurality of materials, the solution may be added to part of the materials or to all the materials. The solution may be added to part of the filter element or to the entire filter element substantially uniformly. The amount of the solution added is, for example, 1 to 250 mg/10 mm. If the amount of the solution added to the filter element exceeds 250 mg/10 mm, the solution may exude or leak from the filter to the outside when an external force is applied to the filter to cause the filter to deform.

The "10 mm" used in the unit of the amount of the solution added means 10 mm in the longitudinal direction of the filter, and mg/10 mm means the weight (mg) of the solution per 10 mm of the filter in the longitudinal direction.

The filter element may contain, in addition to the biodegradable material, the liquid having the ability to filter out phenols, and the thickener described above, activated carbon or a breakable additive releasing container (which is referred to as a "capsule" in this technical field) including a breakable outer shell such as gelatin. When the capsule is broken by the user of the flavor inhalation article before, during, or after use, the additive contained in the capsule is released. Then part or all of the additive is transferred to an air flow passing through the flavor inhalation article during the use of the flavor inhalation article and is transferred to the filter element after the use.

No particular limitation is imposed on the form of the capsule. For example, the capsule may be an easily breakable capsule, and its shape is preferably a sphere. No particular limitation is imposed on the additive contained in the capsule. Preferably, the capsule contains a flavoring agent or activated carbon. The additive contained may be the above-described liquid having the ability to filter out phenols. No particular limitation is imposed on the form of the additive. The additive is generally in a liquid or solid form. The use of the capsule containing the additive is well-known in this technical field. The easily breakable capsule and its production method are well-known in this technical field. A well-known flavoring agent or well-known activated carbon may be used.

### <Plug wrap paper>

The filter in the present embodiment includes the plug wrap paper wrapped around the filter element. When the filter is a multi-segment filter, it is preferable that the plug wrap paper is wrapped around these two or more segments together. When two or more segments are wrapped with separate plug wrap papers, a shaping paper may be used to fix the plurality of filter segments.

No particular limitation is imposed on the form of the plug wrap paper. The plug wrap paper may include at least one seam including an adhesive. The adhesive may include a hot-melt adhesive. The adhesive may include polyvinyl alcohol.

No particular limitation is imposed on the material of the plug wrap paper, and a well-known material may be used. The plug wrap paper may contain a filler such as calcium carbonate.

No particular limitation is imposed on the thickness of the plug wrap paper, and the thickness is generally 20 µm or more and preferably 30 µm or more. The thickness is generally 140 µm or less, preferably 130 µm or less, and more preferably 120 µm or less.

No particular limitation is imposed on the basis weight of the plug wrap paper, and the basis weight is generally 20 gsm or more, preferably 22 gsm or more, and more preferably 23 gsm or more. The basis weight is generally 100 gsm or less, preferably 95 gsm or less, and more preferably 90 gsm or less.

The surface of the plug wrap paper that is in contact with the filter element is formed of a layer repellent to the liquid. When the surface of the plug wrap paper that is in contact with the filter element is formed of the layer repellent to the liquid having the ability to filter out phenols, diffusion of the liquid along the surface of the plug wrap paper during storage can be reduced. In this manner, the liquid can be retained within the filter without holding the liquid in a carrier such as silica gel or encapsulating the liquid in, for example, a capsule.

The plug wrap paper having the liquid repellency may be composed of only the liquid repellent layer or may be composed of a substrate and the liquid repellent layer. When the plug wrap paper is composed of the substrate and the liquid repellent layer, the repellency to the liquid having the ability to filter out phenols may be imparted to the substrate by applying a coating agent containing a material described later that forms the layer repellent to the liquid having the ability to filter out phenols to a surface of the substrate or depositing the above material to the surface by, for example, vapor deposition. The substrate used may be a well-known paper sheet used as the plug wrap paper or a nonwoven fabric formed of a material such as a polymer. The degree of beating of the raw material of the substrate may be increased, or calendering may be performed. In this case, the smoothness and denseness of the surface are controlled, and the paper obtained has improved oil resistance and water resistance (this paper is referred to also as "liquid repellent paper"). This paper alone may be used as the liquid repellent layer. The liquid repellent paper may be used as the substrate, and the liquid repellent layer may be deposited thereon for use. Examples of the liquid repellent paper include glassine paper.

From the viewpoint of production suitability, it is preferable that the liquid repellent layer is homogeneous, but this is not a limitation. Part of the liquid repellent layer may be formed of a different material, and the liquid repellent layer may have different thicknesses.

The material forming the layer repellent to the liquid having the ability to filter out phenols may be at least one material selected from macromolecular compounds, metals, and inorganic oxides.

Examples of the macromolecular compounds include polysaccharides, paraffin, polyolefins, polystyrenes, polyvinyls, fluorocarbon resins, acrylic resins, natural rubbers, synthetic rubbers, silicones, natural resins, alkyd resins, and urethane compounds. Examples of the polysaccharides include starch, cellulose, ethyl cellulose, acetylcellulose, nitrocellulose, and gum arabic. Examples of the polyolefins include polyethylene and polypropylene. Examples of the polyvinyls include polyvinyl alcohol, polyvinyl acetate, and polyvinyl chloride. Examples of the fluorocarbon resins include perfluoroalkyl group-containing compounds. More specific examples include polytetrafluoroethylene. Examples of the acrylic resins include polymethyl acrylate and polymethyl methacrylate. Examples of the synthetic rubbers include polybutadiene. Examples of the silicones include polyoxydimethylsilylene. The material forming the liquid repellent layer may be a copolymer of these macromolecular compounds.

The cellulose is particularly preferably cellulose nanofibers.

Examples of the metals include aluminum and alumina.

Examples of the inorganic oxides include silica.

Of these, at least one selected from the group consisting of starch, cellulose nanofibers, ethyl cellulose, nitrocellulose, gum arabic, aluminum, paraffin, polyethylene, polypropylene, polyvinyl alcohol, fluorocarbon resins, acrylic resins, and silicones is preferred, and at least one selected from the group consisting of ethyl cellulose, acrylic resins, paraffin, polyethylene, polypropylene, fluorocarbon resins, and silicones is more preferred.

The material forming the liquid repellent layer may be a material that exhibits sufficient repellency to the liquid having the ability to filter out phenols and that is appropriately selected from the above materials according to the type of liquid having the ability to filter out phenols that is to be used.

For example, when starch or aluminum selected from the above materials is used, it is preferable that the liquid having the ability to filter out phenols is a liquid having a surface tension larger than that of polypropylene glycol glyceryl ether and is selected from diglycerin, sorbitan fatty acid esters, glycerin fatty acid esters, polyglycerin fatty acid esters, etc.

When one of the perfluoroalkyl group-containing compounds, polypropylene, paraffin, silicones, and cellulose nanofibers among the above materials is used, any combination of materials selected from polypropylene glycol, polypropylene glycol glyceryl ether, polybutylene glycol, diglycerin, sorbitan fatty acid esters, glycerin fatty acid esters, polyglycerin fatty acid esters, propylene glycol fatty acid esters, polyethylene glycol, caprylyl glycol, etc. may be used so long as a spreading area described later is 35 mm² or less.

When the surface tension of the liquid is large, diffusion along the surface of the plug wrap paper tends not to occur.

The surface tension can be measured, for example, by a pendant drop method (ds/de method). Specifically, the liquid is squeezed from an end of a vertically downward thin tube, and the surface tension is computed from the shape of a droplet (hanging droplet) formed of the liquid. In the computation, the maximum diameter (equatorial diameter) de of the hanging droplet and the diameter ds of the hanging droplet at a position located de above the lowermost surface position of the hanging droplet are used.

The spreading area of the liquid having the ability to filter out phenols when 10 mg of the liquid is dropped onto the liquid repellent layer and left to stand in the interior of a room at a temperature of 22°C and a humidity of 60%RH for 30 minutes (this may be hereinafter referred to simply as the "spreading area") is preferably 60 mm² or less and more preferably 35 mm² or less. When the spreading area is within the above range, the leakage of the liquid from the edges of the plug wrap paper due to diffusion of the liquid along the surface of the plug wrap paper can be reduced.

The spreading area can be measured by the following method. 10 mg of the liquid having the ability to filter out phenols is dropped onto a test material using a microsyringe, and the spread liquid is left to stand in the interior of a room at a temperature of 22°C and a humidity of 60%RH for 30 minutes. Then an image of the resulting spread liquid is captured using a digital microscope (VHX-100) manufactured by KEYENCE CORPORATION. The outer circumference of the spread liquid in the captured image is manually identified, and the area of a region surrounded by the identified outer circumference is computed.

No particular limitation is imposed on the average thickness of the liquid repellent layer, and the average thickness may be appropriately set, for example, by changing the combination of the substrate and the liquid repellent layer.

The average thickness of the liquid repellent layer is, for example, 5 to 30 µm. When the liquid repellent layer is disposed on the substrate, the ratio of the thickness of the liquid repellent layer to the thickness of the substrate used is about 0.01 to about 1.0 with the thickness of the substrate set to 1.

When the above layer is formed by applying the coating agent, the coating amount may be appropriately adjusted such that the above thickness is obtained. From the viewpoint of the cost of production, the smaller the coating amount, the better, so long as there are no problems with the liquid repellency and the production suitability. However, when an uncoated region is present, the liquid may leak from the uncoated region. It is therefore necessary to form the layer over the entire substrate.

No particular limitation is imposed on the material, thickness, basis weight, etc. of the shaping paper, and they may be the same as those of the plug wrap paper. At least part of the shaping paper may have repellency to the liquid having the ability to filter out phenols.

### <Method for producing filter>

No particular limitation is imposed on the method for producing the filter, and the filter can be produced by a well-known method. For example, when the filter is a paper filter, the filter can be produced by using paper obtained by subjecting wood pulp to papermaking and shaping the paper into a filter rod. Specifically, for example, the paper obtained by papermaking is subjected to, for example, creping to corrugate the paper, and the paper having the corrugated structure is gathered in a bundle and wrapped with a plug wrap paper to form a rod-shaped filter. The rod-shaped filter is cut to a desired length, and a paper filter can thereby be produced.

The paper machine used may be a well-known paper machine such as a cylinder paper machine, an inclined tanmo machine, a fourdrinier machine, a tanmo machine, etc., and these paper machines may be appropriately combined according to the required characteristics. A dry production method for resin-bonded nonwoven fabrics, thermal-bonded nonwoven fabrics, or spunlaced nonwoven fabrics may be appropriately used.

A filter other than the paper filter can be produced by shaping a raw material into a sheet and form the filter according to the method for producing the paper filter. A filter can also be produced by gathering a fibrous raw material in a bundle, wrapping the raw material with a plug wrap paper to form a rod-shaped filter, and cutting the rod-shaped filter to a desired length.

The liquid having the ability to filter out phenols may be added in any step. For example, the liquid may be added to the filter element after creping but before the filter element is shaped into a rod. The liquid having the ability to filter out phenols may be added to the rod-shaped filter element using a microsyringe.

### <Flavor inhalation article>

Another embodiment of the invention is a flavor inhalation article including a tobacco rod wrapped with a wrapping paper, the filter described above, and a tipping paper that connects the tobacco rod and the filter together.

In the present description, the "flavor inhalation article" is a generic term for inhalation articles that allow the user to enjoy a flavor such as tobacco flavor. More specific examples of the flavor inhalation article include: a combustion-type flavor inhalation article in which a flavor source is combusted to provide the flavor to the user; a non-combustion heating-type flavor inhalation article in which a flavor source is heated without being combusted to provide the flavor to the user; and a non-combustion non-heating-type flavor inhalation article in which the flavor generated from a flavor source without heating and combustion is provided to the user.

### <Tobacco rod>

No particular limitation is imposed on the tobacco rod so long as it has a well-known form. Generally, the tobacco rod includes a tobacco filler wrapped with a wrapping paper No particular limitation is imposed on the tobacco filler, and the tobacco filler used may be a well-known tobacco filler such as shredded tobacco or a reconstituted tobacco sheet. In the present description, the wrapping paper is a paper sheet used to wrap the tobacco filler and is distinguished from the plug wrap paper that is a paper sheet used to wrap the filter element.

The content of moisture in an ordinary tobacco filler such as shredded tobacco included in the tobacco rod is, for example, 10 to 15% by weight and preferably 11 to 13% by weight. When the moisture content is as described above, the occurrence of stains on the wrapping paper is prevented, and the machinability during production of the flavor inhalation article is improved.

When the flavor inhalation article is a non-combustion heating-type flavor inhalation article, the tobacco filler may contain an aerosol-source material. The aerosol-source material is a material that generates an aerosol when heated, and examples thereof include glycerin, propylene glycol, and mixtures thereof.

No particular limitation is imposed on the material of the wrapping paper wrapped around the tobacco filler, and a well-known material can be used. The wrapping paper may contain a filler such as calcium carbonate.

At least part of the wrapping paper may exhibit repellency to the liquid having the ability to filter out phenols, as does the plug wrap paper

### <Tipping paper>

No particular limitation is imposed on the material of the tipping paper that connects the tobacco rod and the filter together, and a well-known material may be used. The tipping paper may contain a filler such as calcium carbonate.

At least part of the tipping paper may exhibit repellency to the liquid having the ability to filter out phenols, as does the plug wrap paper

When at least one of the wrapping paper or the tipping paper includes a colored portion, an ink used for the colored portion may bleed when the liquid added to the filter exudes or leaks from the filter, and the ink bleeding causes the ink to come off (which may be referred to also as ink transfer), so that the appearance of the flavor inhalation article is significantly impaired. Therefore, the above-described filter is preferably applicable to a flavor inhalation article in which at least one of the wrapping paper or the tipping paper includes a colored portion.

Examples of the flavor inhalation article according to the present embodiment will be described using the drawings. However, the present invention is not limited to the following modes, and various modifications are possible so long as they do not depart from the scope of the invention.

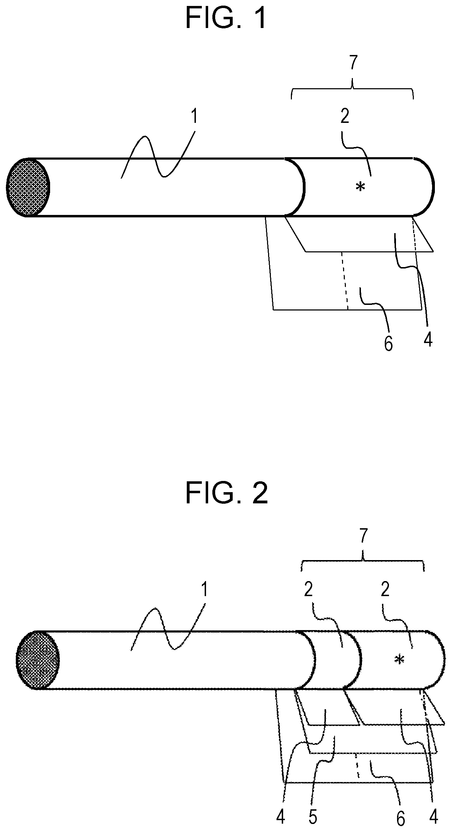

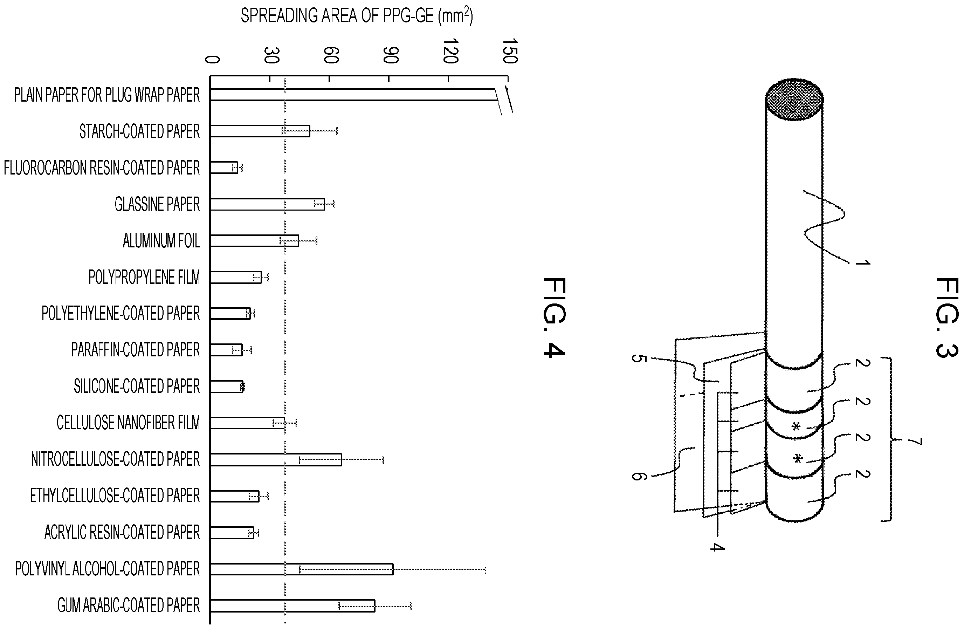

Figs. 1 to 3 are each a schematic illustration of a combustion-type flavor inhalation article (cigarette) in which the filter is a plain filter or a multi-segment filter. In Fig. 1, a filter section including a filter element 2 is wrapped with a plug wrap paper 4, and a filter 7 is thereby formed. In multi-segment filters in Figs. 2 and 3, all filter sections wrapped with respective plug wrap papers 4 are wrapped with a shaping paper 5, and a filter 7 is thereby formed. The filter 7 is connected to a tobacco rod 1 using a tipping paper 6.

Even when the filter used in the invention is composed of one filter segment as shown in Fig. 1, leakage of the liquid can be reduced. Specifically, the filter with the liquid added thereto may be adjacent to the tobacco rod. When the filter is a multi-segment filter including two or more filter sections and the solution is added to only one of the filter sections that is not in contact with the tobacco rod, the exudation or leakage of the solution to the shredded tobacco and the tobacco wrapping paper included in the tobacco rod may be more effectively prevented.

Specifically, the solution may be added to one filter section marked with " *." It is preferable that the solution is added to a filter section forming a mouthpiece end (Fig. 2). When the number of filter sections is three or more, the solution may be added to only a filter section that is not in contact with the tobacco rod and does not form the mouthpiece end, i.e., to only a filter section in a middle portion in the axial direction (Fig. 3).

In the present invention, the filter sections are arranged continuously in the axial direction, as shown in Figs. 1 to 3. In another mode, the filter includes a filter section in contact with the mouthpiece end of the filter and does not include any other filter sections i.e., the filter has a gap (which may be referred to also as a cavity) present between filter sections. The cavity can be formed by shaping the shaping paper and the tipping paper into a cylindrical shape. In this case, it is not always necessary that the shaping paper etc. forming the cavity include a layer repellent to the liquid having the ability to filter out phenols.

Ventilation holes for controlling the ratio of air to tobacco mainstream smoke during smoking may be provided in the tipping paper used in the present invention (the ventilation holes are indicated by a dotted line in the tipping paper 6 in each of Figs. 1 to 3). No particular limitation is imposed on the arrangement of the ventilation holes, and the ventilation holes may be arranged in one row or two rows in the circumferential direction of the cigarette. No particular limitation is imposed on the pitch of the ventilation holes, their size, and the perforation method.

As for the positions of the ventilation holes, it is preferable that the ventilation holes are disposed in positions separated by at least 2 mm from the tobacco rod-side end of the filter with the specific solution added thereto toward the tobacco rod-side. In this case, the smoke taste is expected to be improved. Moreover, from the viewpoint of preventing leakage of the liquid, it is preferable that no ventilation holes are present in the filter with the solution added thereto and in positions between the filter sections.

### <Flavor inhalation article package>

When the flavor inhalation articles in the present embodiment are provided to a user, the flavor inhalation articles are generally packed into a well-known package, and a flavor inhalation article package is thereby formed.

In the flavor inhalation article package, the flavor inhalation articles are wrapped directly with an inner wrapper, and it is preferable that the inner wrapper has a liquid repellent layer in at least portions in contact with the filters of the flavor inhalation articles. In particular, it is preferable that the inner wrapper has the liquid repellent layer in a portion in contact with the mouthpiece ends of the filters.

The specific liquid described above is added to the filter included in each flavor inhalation article in the present embodiment, and the filter is wrapped with the plug wrap paper such that its surface repellent to the liquid faces the filter. Therefore, when the flavor inhalation articles are packed into a package, the function of the plug wrap paper is exerted sufficiently. Specifically, since the liquid is unlikely to diffuse inside the package, it is expected that the liquid is unlikely to volatilize from the filter.

Moreover, when the liquid repellent layer is disposed in the portions of the inner wrapper that are in contact with the filters of the flavor inhalation articles, the leakage and diffusion of the liquid from the filter elements to the inner wrapper can be prevented.

No limitation is imposed on the shape and volume of the package for packing the flavor inhalation articles in the present embodiment, and a conventionally used package may be used.

A preferred range of the volume of the package is, for example, 30 to 150 cm³.

The number of flavor inhalation articles packed into the package is generally 20. However, the number of flavor inhalation articles may be appropriately changed according to the shape or size of the package.

The inner wrapper may be composed of only the liquid repellent layer or may be composed of a substrate and the liquid repellent layer. When the inner wrapper is composed of the substrate and the liquid repellent layer, the repellency to the liquid having the ability to filter out phenols may be imparted to the substrate by applying a liquid resistant agent to the surface of the substrate or depositing the liquid resistant agent to the surface by, for example, vapor deposition. The substrate may be, for example, well-known paper used for inner wrappers or a non-woven fabric formed of a material such as a polymer. Paper having liquid repellency alone may be used as the liquid repellent layer. Alternatively, paper having liquid repellency may be used as the substrate, and the liquid repellent layer may be deposited on the substrate.

Examples of the material forming the liquid repellent layer include those for the plug wrap paper described above. The material forming the liquid repellent layer in the inner wrapper may be the same as or different from the material used for the plug wrap paper.

### EXAMPLES

The present invention will be described more specifically by way of Examples. However, the invention is not limited to the description of the following Examples so long as they do not depart from the scope of the invention.

### <Liquid spreading test>

10 mg of an additive was dropped onto a test material using a microsyringe in the interior of a room at a temperature of 22°C and a humidity of 60%RH, and the spreading area of the droplet after a lapse of 30 minutes was measured. In this test, the additive used was polypropylene glycol glyceryl ether (PPG-GE, molecular weight: 4000) or diglycerin. The test materials used were plain paper for plug wrap paper and commercially available test materials including starch-coated paper, fluorocarbon resin-coated (perfluoroalkyl group-containing compound-coated) paper, glassine paper (manufactured by Yoshiyo Kobou), aluminum foil (manufactured by Mitsubishi Aluminum Co., Ltd.), polypropylene film (manufactured by SEISANNIPPONSHA LTD.), polyethylene-coated paper (manufactured by Fukusuke Kogyo Co., Ltd.), paraffin-coated paper (manufactured by Kojima Shojikido Honpo), silicone-coated paper (manufactured by NIPPON PAPER CRECIA Co., LTD.), cellulose nanofiber film (manufactured by Chuetsu Pulp & Paper Co., Ltd.), nitrocellulose-coated paper, acrylic resin-coated paper, polyvinyl alcohol-coated paper, and gum arabic-coated paper. The droplets started spreading on the test materials immediately after dropping. However, after a lapse of 30 minutes, the spreading of the droplets was stabilized under all the conditions except for the plain paper

The spreading area of the droplet on each test material was computed using image processing. To measure the spreading of the droplet, a digital microscope (VHX-100) manufactured by KEYENCE CORPORATION was used. The magnification of the digital microscope was set to 5X, and the focus was adjusted such that a standard scale could be clearly identified. The device was calibrated by specifying a length of 10 mm on the standard scale using software included with the device. 10 mg of one of the additives was dropped onto one of the test materials having a size of about 3 cm square. After a lapse of 30 minutes, the spreading of the droplet was stabilized, and an image of the test material was captured from above using the digital microscope. In this case, the level of irradiation light was adjusted such that the outer circumference of the additive droplet could be clearly visible to the eye. A measurement-manual-polygonal mode of the accompanying software was used to precisely identify the outer circumference of the droplet in the image, and the spreading area was computed.

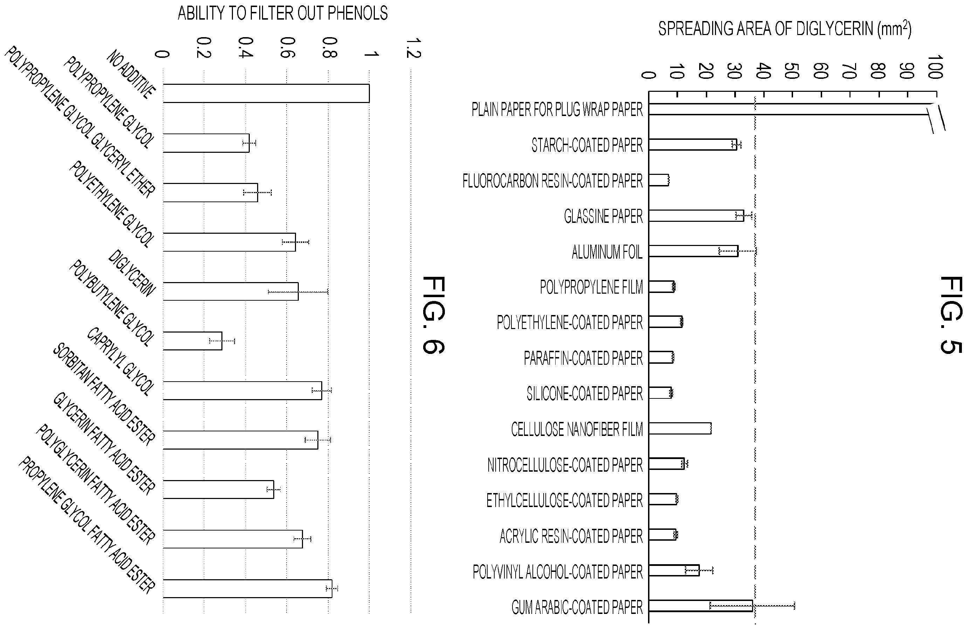

The measurement was performed three times, and the average spreading area and the 95% confidence interval (95% C. I.) are shown in Table 1. The results when PPG-GE was used are shown in Fig. 4, and the results when diglycerin was used are shown in Fig. 5. Broken lines in Figs. 4 and 5 each represent a position at a spreading area of 36.3 mm².

As can be seen from Table 1 and Figs. 4 and 5, in the test materials including the liquid repellent layer, the spreading of the liquid is significantly reduced.

### [Table 1]

**Table 1**

| | PPG-GE | | Diglycerin | |
|---|---|---|---|---|
| | Spreading area (mm²) | 95%C.I. | Spreading area (mm²) | 95%C.I. |
| Plain paper for plug wrap paper | 269 | 72 | 353 | 23 |
| Starch-coated paper | 50 | 14 | 31 | 2 |
| Fluorocarbon resin-coated paper | 14 | 2 | 7 | 0 |
| Glassine paper | 58 | 5 | 33 | 3 |
| Aluminum foil | 45 | 9 | 31 | 6 |
| Polypropylene film | 26 | 4 | 9 | 0 |
| Polyethylene-coated paper | 20 | 2 | 12 | 0 |
| Paraffin-coated paper | 16 | 5 | 8 | 0 |
| Silicone-coated paper | 16 | 1 | 8 | 1 |
| Cellulose nanofiber film | 38 | 6 | 22 | 0 |
| Nitrocellulose-coated paper | 66 | 21 | 12 | 1 |
| Ethylcellulose-coated paper | 25 | 5 | 10 | 0 |
| Acrylic resin-coated paper | 22 | 2 | 9 | 1 |
| Polyvinyl alcohol-coated paper | 92 | 47 | 18 | 5 |
| Gum arabic-coated paper | 83 | 18 | 36 | 15 |

### <Cigarette storage test>

A paper sheet having a width of 220 mm and formed from wood pulp was used as a raw material sheet for paper filters. The paper sheet was corrugated, and polypropylene glycol glyceryl ether (PPG-GE, molecular weight: 4000) was applied to one side of the raw material sheet in an amount of 25 mg per 27 mm of the raw material sheet by pressure spraying. The paper sheet with the PPG-GE added thereto was folded such that a plurality of airflow paths extending from one end to the other end were formed. Then the folded paper sheet was wrapped with plain paper (basis weight: 28 gsm), paper coated with starch (basis weight: 25 gsm), or paper coated with a fluorocarbon resin (perfluoroalkyl group-containing compound) (basis weight: 28 gsm) into a rod shape and cut to a length of 108 mm, and a paper filter was thereby formed. In each case, the coating was formed on one surface, and the paper was wrapped around the raw material sheet with the coated surface on the inner side (i.e., with the coated surface in contact with the raw material sheet). The produced paper filter and the tobacco rod were cut to respective predetermined lengths and connected together using a tipping paper to thereby form a cigarette. The shredded tobacco and the wrapping paper included in the tobacco rod were the same as those for commercial cigarettes Winston (registered trademark). Twenty of the cigarettes were sealed in a package, and the package was stored at normal temperature for 4 months. After the storage, the outer appearance of each cigarette was inspected to evaluate a liquid stain on the wrapping paper. The number of stained cigarettes out of 20 cigarettes was used to compute the rate of occurrence of stained cigarettes.

The results are shown in Table 2 below.

### [Table 2]

**Table 2**

| | Liquid added | Coating agent | Number of stained cigarettes | Rate of occurrence of stained cigarettes |
|---|---|---|---|---|
| Comparative Example 1 | PPG-GE | None | 19 | 95% |
| Example 1 | PPG-GE | Starch | 2 | 10% |
| Example 2 | PPG-GE | Perfluoroalkyl group-containing compound | 0 | 0% |

As shown in Table 2, when the plug wrap paper includes the liquid repellent layer, the leakage of the liquid can be reduced. Specifically, in the above liquid spreading test, when the combination of the PPG-GE and starch was used, the spreading area was about 50 mm², and the rate of occurrence of stained cigarettes could be reduced to 10%. When the combination of the PPG-GE and the perfluoroalkyl group-containing compound was used, the spreading area was 35 mm² or less, and no stained cigarettes were found.

### <Test for influence on ink>

10 mg of one of the liquids described later was dropped using a microsyringe onto a printed surface of a tipping paper with a cork-like patter printed thereon. After a lapse of one minute, the liquid was wiped off with KimWipes S-200 (manufactured by NIPPON PAPER CRECIA Co., LTD.), and then the degree of ink transfer was rated on the following four-level scale from A to D.
A: No noticeable ink transfer was found, and the appearance was not impaired.
B: Slight ink transfer was found, but the appearance was substantially not impaired.
C: Ink transfer was found, and the appearance was impaired.
D: Significant ink transfer was found, and the appearance was significantly impaired.

The liquids used were triacetin, polyethylene glycol (molecular weight: 600), polypropylene glycols (molecular weight: 700, 1000, 2000, 3000), polypropylene glycol glyceryl ethers (molecular weight: 500, 1000, 3000, 4000), polybutylene glycols (molecular weight: 500, 700), diglycerin, and caprylyl glycol.

The results are shown in Table 3.

### [Table 3]

**Table 3**

| | Degree of ink transfer |
|---|---|
| Triacetin | D |
| Polyethylene glycol (molecular weight: 600) | D |
| Polypropylene glycol (molecular weight: 700) | C |
| Polypropylene glycol (molecular weight: 1000) | B |
| Polypropylene glycol (molecular weight: 2000) | A |
| Polypropylene glycol (molecular weight: 3000) | A |
| Polypropylene glycol glyceryl ether (molecular weight: 500) | C |
| Polypropylene glycol glyceryl ether (molecular weight: 1000) | B |
| Polypropylene glycol glyceryl ether (molecular weight: 3000) | A |
| Polypropylene glycol glyceryl ether (molecular weight: 4000) | A |
| Polybutylene glycol (molecular weight: 500) | B |
| Polybutylene glycol (molecular weight: 700) | B |
| Diglycerin | A |
| Caprylyl glycol | A |

As shown in Table 3, the degree of ink transfer varies depending on the type of liquid. Specifically, as for the polymers, the larger the degree of polymerization of the liquid (the larger the molecular weight of the liquid), the smaller the influence on ink transfer. In the present invention, the exudation or leakage of the liquid added to the filter can be sufficiently reduced. Moreover, even when a small amount of the liquid added to the filter adheres to the wrapping paper or tipping paper having a colored portion during production, the impairment of the appearance of the flavor inhalation article due to ink transfer can be reduced when the liquid added to the filter is polypropylene glycol having a molecular weight of 1000 or more, polypropylene glycol glyceryl ether having a molecular weight of 1000 or more, polybutylene glycol having a molecular weight of 500 or more, diglycerin, or caprylyl glycol.

### <Test for ability to filter out phenols>

Cigarette samples were produced as follows.

First, a paper filter having a length of 27 mm and a diameter of 7.7 mm was prepared. Specifically, first, a corrugated paper sheet (basis weight: 40 g/m²) was folded such that a plurality of airflow paths extending from one end to the other end were formed, and the folded paper sheet was wrapped with a plain paper for a plug wrap paper. The resulting filter was cut to a length of 120 mm to thereby produce a filter rod. The air-flow resistance of the filter rod was adjusted to 400 mmH₂O, and the diameter of the filter was adjusted to 7.7 mmφ. The obtained filter rod was cut to a length of 27 mm, and 25 mg of a commercial additive was added using a microsyringe. The resulting filter rod was stored at room temperature for 2 days or longer to stabilize the distribution of the additive in the filter, and a paper filter for the test was thereby obtained. The additive used was one of polypropylene glycol (molecular weight: 2000), polypropylene glycol glyceryl ether (molecular weight: 4000), polyethylene glycol (molecular weight: 600), diglycerin, polybutylene glycol (molecular weight: 700), caprylyl glycol, sorbitan fatty acid ester (sorbitan monooleate), glycerin fatty acid ester (glycerin diacetate monolaurate), polyglycerin fatty acid ester (polyglycerin trilaurate), and propylene glycol fatty acid ester (propylene glycol monopalmitate). Then commercial Winston tobacco rods and the filters were joined together to produce cigarette samples with different levels.

These cigarette samples were subjected to a smoking test under the following conditions and analyzed.

An automatic smoking machine (Cerulean SM410) was used to automatically smoke one of the cigarette samples under the conditions of a smoking volume of 17.5 mL/sec, a smoking time of 2 sec/puff, and a smoking frequency of 1 puff/min. Tobacco particulate matter (TPM) in the tobacco smoke was collected by a Cambridge filter (Borgwaldt 44 mmφ). The amount of the TPM was measured based on the difference in the mass of the Cambridge filter before and after smoking. Then the Cambridge filter was immersed in 10 mL of a phenol extraction solvent placed in a screw tube bottle and shown in Table 4 below, and the bottle was shaken to thereby obtain an analysis sample. 1 µL of the obtained analysis sample was collected by a microsyringe and analyzed by gas-chromatograph-mass spectrometry (GC-MSD: Gas Chromatography-Mass Selective Detector). The GC used was Agilent G7890A manufactured by Agilent Technologies Inc., and the MSD used was Agilent 5795C manufactured by Agilent Technologies Inc.

### [Table 4]

**Table 4**

| | Compound | Concentration |
|---|---|---|
| Solvent | t-butyl methyl ether | - |
| Internal standard | o-chlorophenol | 10.7 µg/mL |

For each of the cigarette samples, the amount of TPM per cigarette and the amount of phenols in the tobacco smoke were measured using the method described above. The amount of phenols in the tobacco smoke was divided by the amount of TPM, and the quotient was normalized using the value for a paper filter with no additive added thereto to evaluate the ability of the additive to filter out phenols. The average of three evaluation result values and the standard deviation are shown in Fig. 6.

As can be seen from Fig. 6, polypropylene glycol (molecular weight: 2000), polypropylene glycol glyceryl ether (molecular weight: 4000), polyethylene glycol (molecular weight: 600), diglycerin, polybutylene glycol (molecular weight: 700), caprylyl glycol, sorbitan fatty acid ester (sorbitan monooleate), glycerin fatty acid ester (glycerin diacetate monolaurate), polyglycerin fatty acid ester (polyglycerin trilaurate), and propylene glycol fatty acid ester (propylene glycol monopalmitate) each have the ability to filter out phenols. Of these, polypropylene glycol (molecular weight: 2000), polypropylene glycol glyceryl ether (molecular weight: 4000), polyethylene glycol (molecular weight: 600), diglycerin, polybutylene glycol (molecular weight: 700), glycerin fatty acid ester (glycerin diacetate monolaurate), and polyglycerin fatty acid ester (polyglycerin trilaurate) each have a high ability to filter out phenols, and polypropylene glycol (molecular weight: 2000), polypropylene glycol glyceryl ether (molecular weight: 4000), and polybutylene glycol (molecular weight: 700) each have a particularly high ability to filter out phenols.

### Reference Signs List

- 1: tobacco rod
- 2: filter element
- 4: plug wrap paper
- 5: shaping paper
- 6: tipping paper
- 7: filter

## Claims

1. A filter for a flavor inhalation article, the filter comprising:
a filter element containing a biodegradable material; and a plug wrap paper wrapped around the filter element,
wherein the filter element contains a liquid having the ability to filter out phenols, and
wherein a surface of the plug wrap paper that is in contact with the filter element is formed of a layer repellent to the liquid.

2. The filter according to claim 1, wherein a spreading area of the liquid on the layer repellent to the liquid is 35 mm² or less.

3. The filter according to claim 1 or 2, wherein the plug wrap paper is composed of a substrate and the layer repellent to the liquid, the layer being formed on a surface of the substrate that is in contact with the filter element.

4. The filter according to any one of claims 1 to 3, wherein the liquid is at least one selected from the group consisting of polypropylene glycol, polypropylene glycol glyceryl ether, polybutylene glycol, diglycerin, sorbitan fatty acid esters, glycerin fatty acid esters, polyglycerin fatty acid esters, propylene glycol fatty acid esters, polyethylene glycol, and caprylyl glycol.

5. The filter according to any one of claims 1 to 4, wherein the liquid is polypropylene glycol having a molecular weight of from 2000 to 4000 inclusive, polypropylene glycol glyceryl ether having a molecular weight of from 3000 to 4000 inclusive, or diglycerin.

6. The filter according to any one of claims 1 to 5, wherein the layer repellent to the liquid contains at least one selected from the group consisting of starch, cellulose nanofibers, ethyl cellulose, nitrocellulose, gum arabic, aluminum, paraffin, polyethylene, polypropylene, polyvinyl alcohol, fluorocarbon resins, acrylic resins, and silicones.

7. The filter according to any one of claims 1 to 6, wherein the layer repellent to the liquid contains at least one selected from the group consisting of ethyl cellulose, acrylic resins, paraffin, polyethylene, polypropylene, fluorocarbon resins, and silicones.

8. The filter according to any one of claims 1 to 5, wherein the layer repellent to the liquid is composed of paper repellent to the liquid.

9. A flavor inhalation article comprising: a tobacco rod wrapped with a wrapping paper; the filter according to any one of claims 1 to 8; and a tipping paper that connects the tobacco rod and the filter together.

10. The flavor inhalation article according to claim 9, wherein at least one of the tipping paper or the plug wrap paper includes a colored portion.

11. A flavor inhalation article package comprising the flavor inhalation article according to claim 9 or 10, the flavor inhalation article being packed inside the flavor inhalation article package, wherein the flavor inhalation article is wrapped directly with an inner wrapper, and wherein a layer repellent to the liquid having the ability to filter out phenols is disposed at least in a portion of the inner wrapper that is in contact with the filter of the flavor inhalation article.

12. The flavor inhalation article package according to claim 11, wherein the layer repellent to the liquid and included in the inner wrapper contains at least one selected from the group consisting of starch, cellulose nanofibers, ethyl cellulose, nitrocellulose, gum arabic, aluminum, paraffin, polyethylene, polypropylene, polyvinyl alcohol, fluorocarbon resins, acrylic resins, and silicones.

13. The flavor inhalation article package according to claim 11 or 12, wherein the layer repellent to the liquid and included in the inner wrapper contains at least one selected from the group consisting of ethyl cellulose, acrylic resins, paraffin, polyethylene, polypropylene, fluorocarbon resins, and silicones.
